# EUROPEAN PATENT APPLICATION

(11) **EP 4 553 037 A1**
(43) Date of publication of application: **14.05.2025**
(21) Application number: 23306934.3
(22) Date of filing: 09.11.2023
(51) Int. Cl.: C01B 3/04, B01J 35/39

(54) **A METHOD AND APPARATUS FOR PRODUCING HYDROGEN BY CONTINUOUS-FLOW PHOTOCATALYTIC WATER SPLITTING**

(71) Applicant: TOYOTA JIDOSHA KABUSHIKI KAISHA, Toyota-shi, Aichi-ken, 471-8571 (JP)
(72) Inventor: JOHNSON, Hannah, 1140 BRUSSELS (BE); CARETTI, Marina, 1140 BRUSSELS (BE); SIVULA, Kevin, 1015 LAUSANNE (CH); YUM, Jun-Ho, 1015 LAUSANNE (CH); KIM, Minkyung, 1015 LAUSANNE (CH); RIDEAU, Emeline, 1015 LAUSANNE (CH); JOHANNING, Melanie Victoria, 1015 LAUSANNE (CH)
(74) Representative: Cabinet Beau de Loménie

(57) **Abstract**

The invention concerns a method for producing hydrogen by continuous-flow photocatalytic water splitting allowing higher water concentration to be attained in the reaction volume and therefore higher rates of reaction in comparison with the prior art. The invention also concerns an associated apparatus.

## Description

### BACKGROUND OF THE INVENTION

### 1. Field of the Invention

The invention relates to a method for producing hydrogen (H₂) through continuous-flow photocatalytic water splitting with an improved rate of reaction, and to an apparatus suitable for carrying such a method.

### 2. Description of Related Art

It is known to produce hydrogen by performing photocatalytic water splitting leading to dissociation of water (H₂O) into hydrogen (H₂) and oxygen (O₂). This reaction is performed using a semi-conductor photocatalyst capable, when irradiated with a specific excitation light, to absorb photons and generate excited electrons in its conduction band and holes in its valence band. These excited electrons reduce protons (H⁺) to generate H₂ and the holes oxidize H₂O to generate O₂.

In some techniques of the prior art, water is transported to the reaction volume and introduced therein in vapor state along with a carrier gas such as argon (Ar) or nitrogen (N₂). The quantity of water is therefore limited by maximum partial pressure possible in carrier gas. This limits the rate of reaction.

### SUMMARY OF THE INVENTION

In a first aspect, an embodiment of the present invention provides a method for producing hydrogen, comprising:
- producing hydrogen in a reaction volume, heated at a temperature greater than the boiling point of water, by continuous-flow photocatalytic water splitting on a semi-conductor photocatalyst irradiated with an excitation light to generate excited electrons in the conduction band of the photocatalyst, wherein the photocatalyst is in contact with (a) a carrier gas supersaturated with water vapor, and with (b) a condensed liquid water phase, and wherein the carrier gas and water are separately introduced in the reaction volume and mix therein, water being introduced in the reaction volume in the liquid state in a sufficient quantity to supersaturate the carrier gas with water vapor and form the condensed liquid water phase on the photocatalyst.

In the techniques of the prior art wherein water is introduced in the reaction volume in vapor state, water saturation equilibrium pressure is affected by the temperature of the flow gas and limits the amount of water that can be injected into the photocatalytic reactor. This mass transport (rate of water landing on the photocatalyst surface) limitation slows down the rate of reaction. The invention is remarkable in that water is introduced in the liquid state and separately from the carrier gas. The amount of introduced water is therefore no more limited by maximum partial pressure possible in carrier gas as water and gas are transported separately, and the invention thus achieves higher water concentration in the reaction volume leading to the condensation of the liquid water phase on the photocatalyst. The invention therefore allows to improve the rate of reaction in comparison with the prior art.

According to another embodiment, the water in the liquid state is transported and introduced in the reaction volume by a first flow channel, and the carrier gas is transported and introduced in the reaction volume by a second flow channel distinct from the first flow channel and located around it.

In this arrangement, the carrier gas advantageously acts as a thermal shield for the liquid water transported inside the volume defined by the second channel. This further increases the quantity of the condensed liquid water phase present on the photocatalyst, and therefore the rate of hydrogen production.

According to another embodiment, the water in the liquid state is introduced in the reaction volume at temperature that is less than 30°C.

This further increases the quantity of the condensed liquid water phase present on the photocatalyst, and therefore the rate of hydrogen production.

According to another embodiment, both carrier gas and water in the liquid state are introduced directly on the photocatalyst.

This further increases the quantity of the condensed liquid water phase present on the photocatalyst, and therefore the rate of hydrogen production.

According to another embodiment, the reaction volume is heated at a temperature, measured at the semi-conductor photocatalyst, greater than or equal to 260°C, e.g. lying in the range 260°C and 310°C, the volume flow rate of water in the liquid state introduced in the reaction volume lies in the range 1 µL / min to 24 µL / min and the volume flow rate of the carrier gas introduced in the reaction volume lies in the range 1 mL / min to 100 mL / min.

Unless the contrary is specified, the temperature of the reaction volume is measured at the semi-conductor photocatalyst. These specific conditions optimize the performance of the hydrogen production method. In particular, the volume flow rate of water in the liquid state introduced in the reaction volume lies in the range 5 µL / min to 8 µL / min, and the volume flow rate of the carrier gas introduced in the reaction volume lies in the range 5 mL / min to 20 mL / min. These specific conditions further optimize the performance of the hydrogen production method.

According to another embodiment, the reaction volume is heated at a temperature, measured at the semi-conductor photocatalyst, greater than or equal to 260°C, e.g. lying in the range 260°C and 310°C, and a ratio X/Y lies in the range 1 to 3, for example 1 to 2, where X is the volume flow rate of water in the liquid state introduced in the reaction volume in µL / min, and Y is the volume flow rate of the carrier gas introduced in the reaction volume in mL / min. This advantageously avoids changing the pressure significantly in the reaction volume.

According to another embodiment, an excitation light beam forms an angle with a longitudinal direction of the photocatalyst that lies in the range 45° to 90°.

This orientation maximizes the contact with the water inlet and the light, and therefore the rate of hydrogen production.

In a second aspect, an embodiment of the present invention provides an apparatus for hydrogen gas production, comprising:
- a photoreactor defining a reaction volume comprising a semi-conductor photocatalyst configured to cause water splitting to produce hydrogen gas when irradiated with an excitation light,
- a light source configured to irradiate the photocatalyst with said excitation light,
- a heating device configured to heat the reaction volume at a temperature greater than the boiling point of water, and
- an introduction device configured to separately introduce water in the liquid state and a carrier gas in the reaction volume and to allow their mixing therein, wherein the introduction device comprises:
   - a first flow channel intended to be in communication with a liquid water source and opening out in the reaction volume,
   - a second flow channel, distinct from the first channel, intended to be communication with a carrier gas source and opening out in the reaction volume, said second flow channel being located around the first flow channel, and
   - a flow control unit configured to control the flow of water in the first flow channel and the flow of the carrier gas in the second flow channel, and configured to introduce liquid water in the reaction volume in a sufficient quantity to supersaturate the carrier gas with water vapor and form condensed liquid water phase on the photocatalyst.

This apparatus is specially adapted to achieve higher water concentration in the reaction volume since it is configured to introduce water in the liquid state separately from the carrier gas. The presence of the second channel around the first channel further increases the rate of reaction by controlling the temperature increase of liquid water when approaching the reaction volume. This apparatus may be intended to carry out the above described method.

According to another embodiment, both first and second channels open out directly on the photocatalyst.

This further increases the quantity of the condensed liquid water phase present on the photocatalyst, and therefore the rate of hydrogen production.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating an apparatus for hydrogen gas production according to an embodiment of the invention; and
FIG. 2 is a schematic diagram specifically illustrating the photoreactor of the apparatus shown in FIG. 1.
FIG. 3 is a schematic diagram of a cross-section of the introduction device of FIG. 2 taken at the line III-III.

### DETAILED DESCRIPTION OF EMBODIMENTS

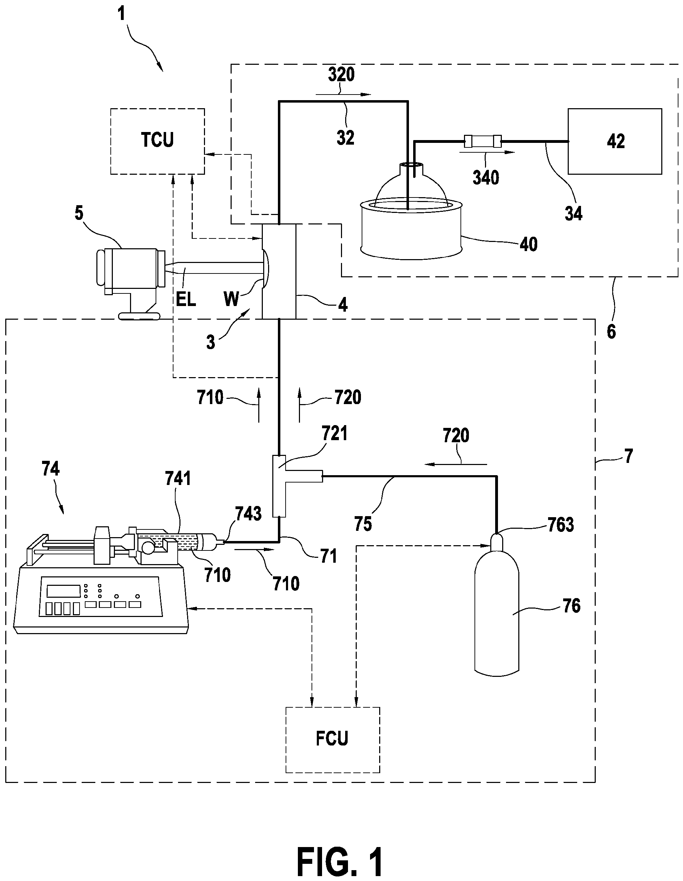

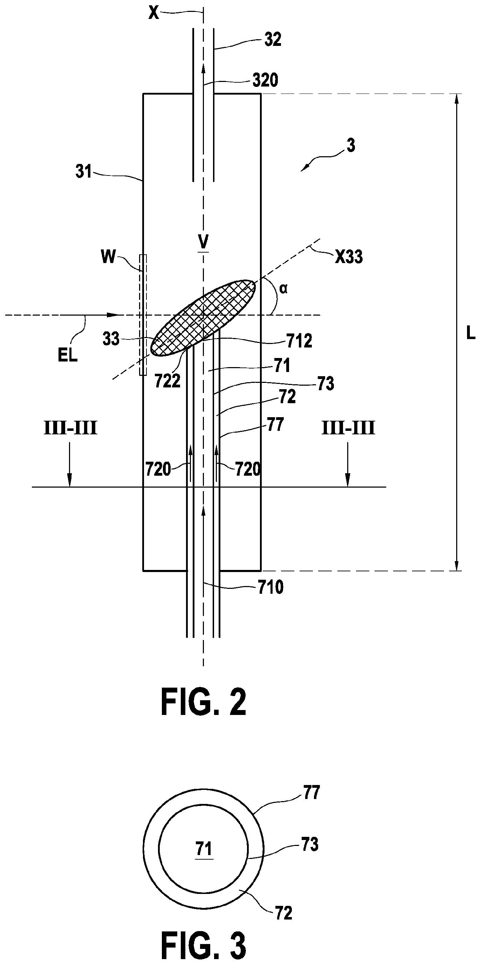

FIG. 1 illustrates an apparatus 1 for hydrogen gas production according to an embodiment of the invention. The apparatus 1 comprises a photoreactor 3, which will be detailed below in connection with FIGS. 2 and 3, and a light source 5, for example a Xenon lamp, that is configured to produce an excitation light EL irradiating a photocatalyst 33 and resulting in photocatalytic water splitting and hydrogen generation in the photoreactor 3. The photoreactor 3 may be surrounded by a heating device 4 that is configured to heat the photoreactor 3 at a temperature greater than the boiling point of water. The heating device 4 may be made of conducting metal tubes which are wrapped around the photoreactor 3. These metal tubes may cover the whole area of the photoreactor 3 except the window W as shown. In the embodiment shown, the heating device 4 is a device that is distinct from the light source 5. However, it does not depart from the invention to remove the heating device 4 and use a concentrated light source to attain the desired temperature on the photocatalyst 33.

The apparatus 1 further comprises an introduction device 7 that is configured to separately introduce water in the liquid state and a carrier gas in the photoreactor 3 and to allow their mixing therein. The introduction device 7 comprises a first flow channel 71 and a second flow channel 72 that is distinct from the first flow channel 71. The relative arrangement of the first 71 and second 72 flow channels will be detailed below in connection with FIGS. 2 and 3. The first flow channel 71 is in communication with a liquid water source 74. The liquid water source 74 comprises a container 741, for example in the form of a syringe pump, containing liquid water 710. Liquid water 710 passes through an exit port 743 of the liquid water source 74 to be introduced in the first flow channel 71. In the embodiment shown, the first flow channel 71 extends from the exit port 743 to the photoreactor 3 wherein it opens out to introduce liquid water therein. The second flow channel 72 is in communication with a carrier gas source 76, which may for example be in the form of a container containing the pressurized carrier gas. In the embodiment shown, the carrier gas passes through an exit port 763 of the carrier gas source 76 to be introduced into an intermediary flow channel 75 that is distinct from the second flow channel 72. The intermediary flow channel 75 may extend from the exit port 763 to an inlet 721 of the second flow channel 72 to introduce the carrier gas therein. The second flow channel 72 extends from the inlet 721 to the photoreactor 3 wherein it opens out to introduce carrier gas therein. The distribution of liquid water and carrier gas is controlled by a flow control unit FCU that will be detailed below.

Water and carrier gas are separately introduced in the photoreactor 3 by the introduction device 7. They continuously flow through the photoreactor 3 to produce hydrogen by photocatalytic water splitting on the photocatalyst 33 irradiated by excitation light EL. The apparatus 1 further comprises an evacuation section 6 wherein the thus produced hydrogen, along with other products such as residual water vapor, form a gas phase 320 that flows through an outlet channel 32 of the photoreactor 3 that is opposite to the introduction device 7 (and to first 71 and second 72 flow channels) in the embodiment shown. The outlet channel 32 may be thermally insulated by known means (not shown) to avoid the build-up of condensation therein which could block the gas flow. The apparatus 1 comprises a temperature control unit TCU that may notably monitor the temperature in the photoreactor 3 to ensure it is appropriate and may control the heating device 4 if necessary to adjust this temperature. The outlet channel 32 may extend from the photoreactor 3 to a cold trap 40 wherein condensable species condense and separate from the gas phase 320 evacuated from the photoreactor 3. The thus separated gas phase 340 may then flow through a channel 34 extending from the cold trap 40 to a separating device 42, known as such, for separating hydrogen from the other remaining species.

The photoreactor 3 will now be more detailed in connection to FIGS. 2 and 3.

The photoreactor 3 comprises a wall 31 defining a reaction volume V wherein a semi-conductor photocatalyst 33 is present. As above mentioned, the photocatalyst 33 is configured to cause water splitting to produce hydrogen gas when irradiated with the excitation light EL. Different photocatalysts 33 that may be used in the invention are known from the art. For example, the photocatalyst 33 may be chosen among titanium dioxide (TiO₂), strontium titanate (SrTiO₃), carbon nitride (C₃N₄), transition metal dichalcogenides (such as molybdenum disulfide (MoS₂), tin disulfide (SnS₂) and tungsten selenide (WSe₂)), bismuth vanadate (BiVO₄), semiconducting polymers (such as Poly(benzimidazobenzophenanthroline) (BBL)) or a mixture of such compounds. The photocatalyst 33 is generally doped, particularly SrTiO₃ or TiO₂, with up to 5% of another element to improve light absorption properties. The photocatalyst 33 may be in the form of particles deposited on a substrate. The substrate may be in the form of a sheet, mesh or felt. The use of a mesh or felt is advantageous as it is porous so it allows the water to come through to the photocatalyst directly, otherwise the water needs to go "around" the substrate to reach the photocatalyst. This substrate could be composed, for example, from C, Ti, W or SiO₂ (quartz or glass). The use of SiO₂ (quartz or glass) is advantageous as its visible light transparency allows the penetration of light throughout the structure (i.e. allowing the photocatalyst to be active to a greater depth). The assembly formed of the photocatalyst 33 and substrate is not mobile during the hydrogen production and is held in place by a holder (not shown).

The wall 31 defines the window W located in front of the photocatalyst 33. The heating device 4 is not shown in FIG. 2. The excitation light EL coming from the light source 5 passes through the window W and irradiates the photocatalyst 33. This generates excited electrons in the conduction band of the photocatalyst 33. The excitation light EL may have a peak wavelength lying in the range 200 nm to 1000 nm. The excitation light EL is chosen in view of the wavelength range where the semiconductor can be excited.

The heating device 4 may heat the reaction volume V at a temperature that is at least 120°C. This avoids any risk of build-up of condensation which for example may block the light EL coming in if this occurs on the window W. The temperature, measured at the photocatalyst 33, may be greater than or equal to 260°C, e.g. may lie in range 260°C to 310°C. The excitation light beam EL may form an angle α that lies in the range 45° to 90° with a longitudinal direction X33 of the photocatalyst 33.

The water 710 is introduced through the first flow channel 71 that opens out in the reaction volume V at a first outlet 712. The first outlet 712 is located at a longitudinal end of the first flow channel 71. The first flow channel 71 terminates at the first outlet 712. The water 710 may be introduced in the reaction volume V at room temperature (between 20°C and 25°C). As shown in FIG. 2, the first flow channel 71 may directly open out on the photocatalyst 33. The first outlet 712 may be spaced from the photocatalyst 33 by a distance that is less than or equal to 1 cm. A portion of the first flow channel 71 may extend in the reaction volume V. In the embodiment shown the first flow channel 71 extends on at least 25%, for example on at least 33%, of a length L of the photoreactor 3. The first flow channel 71 does not extend through the entire length L of the photoreactor 3. The first flow channel 71 may be in the form of a tube. The first flow channel 71 may be delimited by a first wall 73.

The carrier gas 720 is introduced through the second flow channel 72 that opens out in the reaction volume V at a second outlet 712. The second outlet 712 is located at a longitudinal end of the second flow channel 72. The second flow channel 72 terminates at the second outlet 712. The carrier gas 720 may be an inert gas such as nitrogen (N₂) or argon (Ar). The second flow channel 72 is distinct from the first channel 71 and located around it in the embodiment shown. The second flow channel 72 may be located all around (at 360°) the first flow channel 71. The first 71 and second 72 flow channels may both extend along a common axis X that corresponds to the longitudinal axis X of the photoreactor 3 in the embodiment shown. The first 71 and second 72 flow channels may be concentric as shown. The second flow channel 72 may be in the form of a tube. The second flow channel 72 may be delimited by the first wall 73 and by a second wall 77. The first wall 73 may separate the second flow channel 72 from the first flow channel 71. The second flow channel 72 is located inside the second wall 77. The second flow channel 72 may also directly open out on the photocatalyst 33. The second outlet 722 may be spaced from the photocatalyst 33 by a distance that is less than or equal to 1 cm. A portion of the second flow channel 72 may extend in the reaction volume V. In the embodiment shown the second flow channel 72 extends on at least 25%, for example on at least 33%, of the length L of the photoreactor 3. The second flow channel 72 does not extend through the entire length L of the photoreactor 3.

The carrier gas 720 and water 710 are separately introduced in the reaction volume V and mix therein. There are not mixed before entering the reaction volume V, or before passing through the first 712 and second 722 outlets. The water 710 is introduced in a greater quantity in comparison with the techniques of the prior art due to this separate introduction, as explained above. Water 710 is therefore introduced in a sufficient quantity to supersaturate the carrier gas 720 with water vapor and form condensed liquid water phase due to this supersaturation. The photocatalyst 33 is in contact with the thus water supersaturated carrier gas and with this condensed liquid water phase.

The flow control unit FCU controls the flow of water 710 in the first flow channel 71 and the flow of the carrier gas 720 in the second flow channel 72. The flow control unit FCU is configured to control the volume flow rates of water 710 and carrier gas 720 and maintain them to desired values to obtain the desired supersaturation of the carrier gas with water vapor in the reaction volume V. The flow control unit FCU may comprise a memory in which the desired volume flow rates are recorded and a processor for controlling the water 74 and gas 76 sources to impose such flow rates during the hydrogen production method. The volume flow rate of water 710 in the liquid state introduced in the reaction volume V may lie in the range 1 µL / min to 24 µL / min, for example may lie in the range 5 µL / min to 8 µL / min. The volume flow rate of the carrier gas 720 introduced in the reaction volume V may lie in the range 1 mL / min to 100 mL / min, for example may lie in the range 5 mL/min to 20 mL/min. The temperature control unit TCU controls the temperature in the photoreactor 3, and optionally measures the temperature in the outlet channel 32 after leaving the reaction volume V and in the first 71 and second 72 channels before entering the reaction volume V. The temperature control unit TCU is configured to control the heating device 4 to ensure the temperature is appropriate. The temperature control unit TCU may comprise a memory in which the desired temperature(s) is(are) recorded and a processor for controlling the heating device 4.

The embodiment described concerns a case wherein the second flow channel 72 is located around the first flow channel 71. However, it does not depart from the invention to have other arrangements. For example, the invention also concerns a method wherein it is the first flow channel that is around the second flow channel, or even a case wherein the first and second channels are separate and not located around each other but still opening out in the same area.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A method for producing hydrogen, comprising:
- producing hydrogen in a reaction volume (V), heated at a temperature greater than the boiling point of water, by continuous-flow photocatalytic water splitting on a semi-conductor photocatalyst (33) irradiated with an excitation light (EL) to generate excited electrons in the conduction band of the photocatalyst, wherein the photocatalyst is in contact with (a) a carrier gas supersaturated with water vapor, and with (b) a condensed liquid water phase,
and wherein the carrier gas (720) and water (710) are separately introduced in the reaction volume and mix therein, water being introduced in the reaction volume in the liquid state in a sufficient quantity to supersaturate the carrier gas with water vapor and form the condensed liquid water phase on the photocatalyst.

2. A method according to claim 1, wherein the water (710) in the liquid state is transported and introduced in the reaction volume by a first flow channel (71), and wherein the carrier gas (720) is transported and introduced in the reaction volume (V) by a second flow channel (72) distinct from the first flow channel and located around it.

3. A method according to claim 1 or 2, wherein the water (710) in the liquid state is introduced in the reaction volume (V) at temperature that is less than 30°C.

4. A method according to any one of claims 1 to 3, wherein both carrier gas (720) and water (710) in the liquid state are introduced directly on the photocatalyst (33).

5. A method according to any one of claims 1 to 4, wherein the reaction volume (V) is heated at a temperature, measured at the semi-conductor photocatalyst (33), greater than or equal to 260°C, wherein the volume flow rate of water (710) in the liquid state introduced in the reaction volume lies in the range 1 µL / min to 24 µL / min and the volume flow rate of the carrier gas (720) introduced in the reaction volume lies in the range 1 mL / min to 100 mL / min.

6. A method according to claim 5, wherein the volume flow rate of water (710) in the liquid state introduced in the reaction volume (V) lies in the range 5 µL / min to 8 µL / min, and wherein the volume flow rate of the carrier gas (720) introduced in the reaction volume lies in the range 5 mL/min to 20 mL/min.

7. A method according to any one of claims 1 to 6, wherein the reaction volume is heated at a temperature, measured at the semi-conductor photocatalyst, greater than or equal to 260°C, and wherein a ratio X/Y lies in the range 1 to 3, where X is the volume flow rate of water in the liquid state introduced in the reaction volume in µL / min, and Y is the volume flow rate of the carrier gas introduced in the reaction volume in mL / min.

8. A method according to any one of claims 1 to 7, wherein an excitation light beam (EL) forms an angle (α) with a longitudinal direction (X33) of the photocatalyst (33) that lies in the range 45° to 90°.

9. An apparatus (1) for hydrogen gas production, comprising:
- a photoreactor (3) defining a reaction volume (V) comprising a semi-conductor photocatalyst (33) configured to cause water splitting to produce hydrogen gas when irradiated with an excitation light (EL),
- a light source (5) configured to irradiate the photocatalyst with said excitation light,
- a heating device (4) configured to heat the reaction volume at a temperature greater than the boiling point of water, and
- an introduction device (7) configured to separately introduce water (710) in the liquid state and a carrier gas (720) in the reaction volume and to allow their mixing therein, wherein the introduction device comprises:
• a first flow channel (71) intended to be in communication with a liquid water source and opening out in the reaction volume,
• a second flow channel (72), distinct from the first channel, intended to be communication with a carrier gas source (76) and opening out in the reaction volume, said second flow channel being located around the first flow channel, and
• a flow control unit (FCU) configured to control the flow of water in the first flow channel and the flow of the carrier gas in the second flow channel, and configured to introduce liquid water in the reaction volume in a sufficient quantity to supersaturate the carrier gas with water vapor and form condensed liquid water phase on the photocatalyst.

10. An apparatus (1) according to claim 9, wherein both first (71) and second (72) channels open out directly on the photocatalyst (33).

## Amended claims

### Amended claims in accordance with Rule 137(2) EPC.

1. A method for producing hydrogen, comprising:
- producing hydrogen in a reaction volume (V), heated at a temperature greater than the boiling point of water, by continuous-flow photocatalytic water splitting on a semi-conductor photocatalyst (33) irradiated with an excitation light (EL) to generate excited electrons in the conduction band of the photocatalyst, wherein the photocatalyst is in contact with (a) a carrier gas supersaturated with water vapor, and with (b) a condensed liquid water phase,
and wherein the carrier gas (720) and water (710) are separately introduced in the reaction volume and mix therein, water being introduced in the reaction volume in the liquid state in a sufficient quantity to supersaturate the carrier gas with water vapor and form the condensed liquid water phase on the photocatalyst, wherein the reaction volume is heated at a temperature, measured at the semi-conductor photocatalyst, greater than or equal to 260°C, wherein the volume flow rate of water in the liquid state introduced in the reaction volume lies in the range 1 µL / min to 24 µL / min and the volume flow rate of the carrier gas introduced in the reaction volume lies in the range 1 mL / min to 100 mL / min,
and wherein the water in the liquid state is transported and introduced in the reaction volume by a first flow channel (71), and wherein the carrier gas (720) is transported and introduced in the reaction volume by a second flow channel (72) distinct from the first flow channel and located around it.

2. A method according to claim 1, wherein the water (710) in the liquid state is introduced in the reaction volume (V) at temperature that is less than 30°C.

3. A method according to claim 1 or 2, wherein both carrier gas (720) and water (710) in the liquid state are introduced directly on the photocatalyst (33).

4. A method according to any one of claims 1 to 3, wherein the volume flow rate of water (710) in the liquid state introduced in the reaction volume (V) lies in the range 5 µL / min to 8 µL / min, and wherein the volume flow rate of the carrier gas (720) introduced in the reaction volume lies in the range 5 mL/min to 20 mL/min.

5. A method according to any one of claims 1 to 4, wherein the reaction volume is heated at a temperature, measured at the semi-conductor photocatalyst, greater than or equal to 260°C, and wherein a ratio X/Y lies in the range 1 to 3, where X is the volume flow rate of water in the liquid state introduced in the reaction volume in µL / min, and Y is the volume flow rate of the carrier gas introduced in the reaction volume in mL / min.

6. A method according to any one of claims 1 to 5, wherein an excitation light beam (EL) forms an angle (α) with a longitudinal direction (X33) of the photocatalyst (33) that lies in the range 45° to 90°.

7. An apparatus (1) for hydrogen gas production, comprising:
- a photoreactor (3) defining a reaction volume (V) comprising a semi-conductor photocatalyst (33) configured to cause water splitting to produce hydrogen gas when irradiated with an excitation light (EL),
- a light source (5) configured to irradiate the photocatalyst with said excitation light,
- a heating device (4) configured to heat the reaction volume at a temperature greater than the boiling point of water, and
- an introduction device (7) configured to separately introduce water (710) in the liquid state and a carrier gas (720) in the reaction volume and to allow their mixing therein, wherein the introduction device comprises:
• a first flow channel (71) intended to be in communication with a liquid water source and opening out in the reaction volume,
• a second flow channel (72), distinct from the first channel, intended to be communication with a carrier gas source (76) and opening out in the reaction volume, said second flow channel being located around the first flow channel, and
• a flow control unit (FCU) configured to control the flow of water in the first flow channel and the flow of the carrier gas in the second flow channel, and configured to introduce liquid water in the reaction volume in a sufficient quantity to supersaturate the carrier gas with water vapor and form condensed liquid water phase on the photocatalyst.

8. An apparatus (1) according to claim 7, wherein both first (71) and second (72) channels open out directly on the photocatalyst (33).
